# EUROPEAN PATENT SPECIFICATION

(11) **EP 2 648 555 B1**
(45) Date of publication and mention of the grant of the patent: **24.09.2014**
(21) Application number: 11826183.3
(22) Date of filing: 06.12.2011
(51) Int. Cl.: A23L 3/22, A23C 3/033

(54) **DEVICE FOR HEAT-TREATING A LIQUID FOOD PRODUCT**
VORRICHTUNG ZUR WÄRMEBEHANDLUNG EINES FLÜSSIGEN LEBENSMITTELPRODUKTES
DISPOSITIF DE TRAITEMENT THERMIQUE D'UN PRODUIT ALIMENTAIRE LIQUIDE

(30) Priority: 06.12.2010 SE 1001160
(43) Date of publication of application: 16.10.2013
(73) Proprietor: Tetra Laval Holdings & Finance SA, 1009 Pully (CH)
(72) Inventor: HOLANOWSKI, Andrzej, S-21624 Malmö (SE); BERTILSSON, Jörgen, S-227 38 Lund (SE); PANTZAR, Göran, S-28434 Perstorp (SE)
(74) Representative: Tetra Pak - Patent Attorneys SE
(86) International application number: PCT/SE2011/051477
(87) International publication number: WO 2012/078100

(56) References cited:
- WO-A1-2004/104271
- WO-A1-2006/102051
- WO-A2-2010/106296
- ROSMANINHO ET AL: "Deposition from a milk mineral solution on novel heat transfer surfaces under turbulent flow conditions", JOURNAL OF FOOD ENGINEERING, BARKING, ESSEX, GB, vol. 85, no. 1, 27 September 2007 (2007-09-27), pages 29-41, XP022274367, ISSN: 0260-8774, DOI: 10.1016/J.JFOODENG.2007.06.018
- KANANEH A B ET AL: "Reduction of milk fouling inside gasketed plate heat exchanger using nano-coatings", FOOD AND BIOPRODUCTS PROCESSING, INSTITUTION OF CHEMICAL ENGINEERS, RUGBY, GB, vol. 88, no. 4, 1 December 2010 (2010-12-01), pages 349-356, XP027546027, ISSN: 0960-3085 [retrieved on 2010-09-24]

## Description

The present invention relates to a device for use in heat-treatment of a liquid food product, which device comprises a heat exchanger having a plurality of sections for heating and cooling of the product, the device also comprising a holder cell for the heat-treated product and a holder cell for protein stabilization.

Heat-treatment of a liquid food product in order to wholly or partially kill off microorganisms is a common treatment method. For a dairy product such as milk having different fat contents, UHT treatment (Ultra High Treatment) or alternatively pasteurization with different temperature and time interval is used.

UHT treatment is common, since the aim is a commercially sterile product which can be stored at room temperature without possible increase in harmful microorganisms in the milk product. The UHT treatment usually takes place at a temperature of 135-150°C for a few seconds.

In order to effect a UHT treatment, two methods, indirect and direct heating, can be used. This invention is preferably geared towards indirect heating, i.e. the use of a heat exchanger to obtain the desired temperature. Both plate heat exchangers and tubular heat exchangers can be used.

In a conventional plant for the heat-treatment of milk products, on the one hand a holder cell for the heated milk product, in which the product shall reside for a certain time at a certain temperature, and on the other hand a holder cell for protein stabilization is used.

The protein stabilization takes place before the milk product receives its final heating and at a temperature which is lower than the final temperature. Protein stabilization is nowadays used in most UHT plants to give the milk product a chance to be chemically stabilized so as to avoid fouling, i.e. burnt-on depositions on hot surfaces, later in the process.

WO 2006/102051 discloses a process for reducing fouling of a food containing protein such as whipping cream during a heat treatment wherein several heat exchangers are employed.

WO 2010/106296 describes a method of reducing fouling of a liquid derived from milk by subjecting the liquid to an electromagnetic field.

WO 2004/104271 teaches a method of preventing protein fouling with means of a silicate coating.

ROSMANINHO ET AL, JOURNAL OF FOOD ENGINEERING, BARKING, ESSEX, GB, vol. 88, no. 4, 1 December 2010 (2010-12-01), pages 349-356, disclose steel surfaces modified by TiN sputtering in order to reduce fouling.

KANANEH A B ET AL, FOOD AND BIOPRODUCTS PROCESSING, INSTITUTION OF CHEMICAL ENGINEERS, RUGBY, GB, vol. 88, no. 4, 1 December 2010 (2010-12-01), pages 349-356, teach plate heat exchangers showing reduced fouling by using nano-composites coatings.

One problem which arises in protein stabilization is that the holder cell acquires a coating of protein fouling, i.e. the inner surface of the holder cell is coated with a protein-rich deposit. This deposit builds up to a certain limit, after which it is at risk of coming loose from the surface of the holder cell and accompanying the product, so as subsequently to stick fast again in the heat exchanger downstream. The plant has then to be stopped and the equipment washed. Since a production time in excess of 40 hours is nowadays desired, this protein fouling is a major problem.

One object of the present invention is to provide a UHT plant which does not need to be stopped and washed after 20 hours.

These and other objects have been achieved according to the invention by virtue of the fact that the device of the type described in the introduction has been given the characteristics whereby the holder cell for protein stabilization has an inside surface which is blasted.

Preferred embodiments of the invention have further been given the characteristics evident from the sub-claims.

Preferred embodiments of the invention will now be described in greater detail with reference to the appended drawing, wherein:

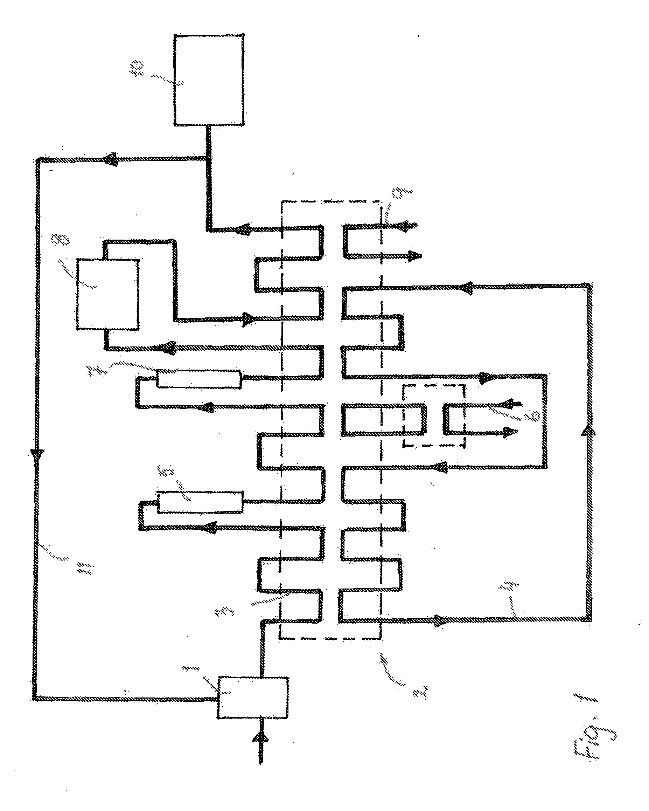

Fig. 1 shows as a flow diagram a UHT plant according to the invention.

The drawings show only those parts which are fundamental to an understanding of the invention.

In Fig. 1 is shown a schematic image of a device according to the invention. In the drawing a tubular heat exchanger has been used, but other types of heat exchanger, such as plate heat exchangers, can also be used.

The food product which enters the plant first enters into a balance vessel 1. The food product is preferably constituted by milk of varying fat content and the purpose of the plant is to heat-treat the milk so that a commercially sterile product is obtained. That is to say, a product that is free from microorganisms which can grow under prevailing conditions. Such a milk product can be stored for a long time at room temperature.

After this, the milk product goes on to a tubular heat exchanger 2 having a number of tube sections 3 for heating the product to about 90-100°C. The heating medium is hot water, which is circulated in a closed hot water circuit 4.

At a temperature of about 90-100°C for a certain time interval of 30-200 seconds, preferably 100-180 seconds and in the preferred embodiment of the invention, about 150 seconds, the milk product must reside in a holder cell 5. Over this time interval, the milk proceeds to chemically stabilize the proteins in the milk. Protein stabilization is nowadays used in most UHT plants to avoid so-called fouling, i.e. burnt-on deposition on hot surfaces later in the process.

The holder cell 5 is usually constituted by a pipe in the tubular heat exchanger, but the holder cell can also be wholly separate from the tubular heat exchanger and be constituted by a straight, alternatively spiral-shaped pipe. To prevent the holder cell 5 from building up a coating of protein-rich fouling which may come loose, the inner wall of the holder cell 5 is blasted. The inner wall in the holder cell 5 is blasted to a Ra value in excess of 1. Preferably, the inner wall of the holder cell is blasted to a Ra value of 1.5-2.3. As a result of the blasting, the protein-rich deposit is detained within the holder cell 5 until the plant is washed.

Normally speaking, a protein-rich layer is stored in the holder cell. After about 20 hours, a washing of the equipment is required to prevent the deposit from being at risk of coming loose and causing blockage of the heat exchanger. By blasting the inner surface in the protein holder cell, production times in excess of 40 hours can be achieved.

Following the product stabilization in the holder cell 5, the heating of the milk product is continued. By using as the heat medium steam which is supplied in the line 6, a temperature of 137-150°C is reached. The milk product is kept at this temperature for a period of a few seconds. The milk product resides in a holder cell 7 which can be constituted by a pipe in the tubular heat exchanger, but the holder cell can also be wholly separate from the tubular heat exchanger and be constituted by a straight or alternatively spiral-shaped pipe.

After the product has reached the necessary sterilization temperature, the product starts to be cooled by means of the hot water circuit 4, which also heats the product. Once the temperature of the product has fallen to about 55-80°C, the product is usually homogenized in a homogenizer 8. After this, the product is cooled further, and finally to filling temperature, by means of iced water fed to the tubular heat exchanger through the line 9.

After the product has been finally cooled, the product is transported onward to one or more filling machines 10, where the product is packed under sterile conditions into aseptic consumer packs. In order to obtain correct overpressure to the filling machine, a circulating return flow of 5-10% back to the balance vessel 1 through the line 11 is required.

As will have been evident from the above description, a device for considerably extending the production time in a UHT plant has been realized with the present invention.

## Claims

1. Device for use in heat-treatment of a liquid food product, which device comprises a heat exchanger (2) having a plurality of sections for heating and cooling of the product, the device also comprising a holder cell (7) for the heat-treated product and a holder cell (5) for protein stabilization, **characterized in that** the holder cell (5) for protein stabilization has an inside surface which is blasted to a Ra value in excess of 1.

2. Device according to Patent Claim 1, **characterized in that** the inside surface of the holder cell (5) has a Ra value between 1.5 and 2.3.

3. Device according to Patent Claim 1, **characterized in that** the food product is constituted by a milk product.

4. Device according to Patent Claim 1, **characterized in that** the heat exchanger (2) is constituted by a tubular heat exchanger.

5. Device according to Patent Claim 1, **characterized in that** the food product must reside in the holder cell (5) for protein stabilization at a temperature of 90-100°C for a time interval of 30-200 seconds.

6. Device according to Patent Claim 5, **characterized in that** the residence time in the holder cell (5) for protein stabilization is 100-180 seconds.

7. Device according to Patent Claim 6, **characterized in that** the residence time in the holder cell (5) for protein stabilization is 150 seconds.

## Patentansprüche

1. Vorrichtung zur Verwendung bei der Wärmebehandlung eines flüssigen Nahrungsmittelprodukts, wobei die Vorrichtung einen Wärmetauscher (2) mit einer Anzahl Abschnitten zum Erwärmen und Kühlen des Produktes umfasst, wobei die Vorrichtung auch eine Haltezelle (7) für das wärmebehandelte Produkt und eine Haltezelle (5) für die Proteinstabilisation umfasst, **dadurch gekennzeichnet, dass** die Haltezelle (5) für die Proteinstabilisation eine Innenfläche aufweist, die auf einen Ra-Wert über 1 abgestrahlt ist.

2. Vorrichtung nach Anspruch 1, **dadurch gekennzeichnet, dass** die Innenfläche der Haltezelle (5) einen Ra-Wert zwischen 1,5 und 2,3 aufweist.

3. Vorrichtung nach Anspruch 1, **dadurch gekennzeichnet, dass** das Nahrungsprodukt ein Milchprodukt umfasst.

4. Vorrichtung nach Anspruch 1, **dadurch gekennzeichnet, dass** der Wärmetauscher (2) einen röhrenförmigen Wärmetauscher umfasst.

5. Vorrichtung nach Anspruch 1, **dadurch gekennzeichnet, dass** das Nahrungsprodukt in der Haltezelle (5) zur Proteinstabilisation bei einer Temperatur von 90 bis 100°C für einen Zeitraum von 30 bis 200 sec. verweilen muss.

6. Vorrichtung nach Anspruch 5, **dadurch gekennzeichnet, dass** die Verweildauer in der Haltezelle (5) für die Proteinstabilisation 100 bis 180 sec. beträgt.

7. Vorrichtung nach Anspruch 6, **dadurch gekennzeichnet, dass** die Verweildauer in der Haltezelle (5) für die Proteinstabilisation 150 sec. beträgt.

## Revendications

1. Dispositif utilisé dans le traitement thermique d'un produit alimentaire liquide, lequel dispositif comprend un échangeur de chaleur (2) ayant une pluralité de sections pour chauffer et refroidir le produit, le dispositif comprenant également une cellule de retenue (7) pour le produit traité thermiquement, et une cellule de retenue (5) pour la stabilisation protéique, **caractérisé en ce que** la cellule de retenue (5) pour la stabilisation protéique présente une surface intérieure qui est soumise à une pulvérisation jusqu'à une valeur Ra supérieure à 1.

2. Dispositif selon la revendication 1, **caractérisé en ce que** la surface intérieure de la cellule de retenue (5) présente une valeur Ra comprise entre 1,5 et 2,3.

3. Dispositif selon la revendication 1, **caractérisé en ce que** le produit alimentaire est constitué par un produit laitier.

4. Dispositif selon la revendication 1, **caractérisé en ce que** l'échangeur de chaleur (2) est constitué par un échangeur de chaleur tubulaire.

5. Dispositif selon la revendication 1, **caractérisé en ce que** le produit alimentaire doit résider dans la cellule de retenue (5) pour la stabilisation protéique à une température de 90-100° C pendant un intervalle de temps de 30-200 secondes.

6. Dispositif selon la revendication 5, **caractérisé en ce que** le temps de résidence dans la cellule de retenue (5) pour la stabilisation protéique est de 100-180 secondes.

7. Dispositif selon la revendication 6, **caractérisé en ce que** le temps de résidence dans la cellule de retenue (5) pour la stabilisation protéique est de 150 secondes.
